# EUROPÄISCHE PATENTSCHRIFT

(11) **EP 0 988 526 B1**
(45) Veröffentlichungstag und Bekanntmachung des Hinweises auf die Patenterteilung: **02.01.2003**
(21) Anmeldenummer: 98937475.6
(22) Anmeldetag: 11.06.1998
(51) Int. Cl.: G01N 21/64

(54) **ANORDNUNG ZUR DETEKTION BIOCHEMISCHER ODER CHEMISCHER SUBSTANZEN MITTELS FLUORESZENZLICHTANREGUNG UND VERFAHREN ZU DEREN HERSTELLUNG**
DEVICE FOR DETECTING BIOCHEMICAL OR CHEMICAL SUBSTANCES BY FLUORESCENCE EXCITATION AND METHOD FOR ITS PRODUCTION
DISPOSITIF DE DETECTION DE SUBSTANCES CHIMIQUES ET BIOCHIMIQUES PAR EXCITATION DE LUMIERE FLUORESCENTE ET SON PROCEDE DE PRODUCTION

(30) Priorität: 13.06.1997 DE 19725050
(43) Veröffentlichungstag der Anmeldung: 29.03.2000
(73) Patentinhaber: FRAUNHOFER-GESELLSCHAFT ZUR FÖRDERUNG DER ANGEWANDTEN FORSCHUNG E.V., 80636 München (DE); Institut Fur Physikalische Hochtechnologie, 07743 Jena (DE)
(72) Erfinder: Karthe, Wolfgang, Prof. Dr., 07745 Jena (DE); BRÄUER, Andreas, D-07646 Schlöben (DE); EISMANN, Frank, D-07749 Jena (DE); KÖHLER, Michael, D-07751 Golmsdorf (DE); WALDHÄUSL, Ralf, D-07745 Jena (DE); DANZ, Norbert, D-07747 Jena (DE)
(74) Vertreter: Pfenning, Meinig & Partner GbR
(86) Internationale Anmeldenummer: EP9803535
(87) Internationale Veröffentlichungsnummer: WO98057151

(56) Entgegenhaltungen:
- EP-A- 0 194 132
- EP-A- 0 519 622
- EP-A- 0 723 146
- WO-A-95/03538
- WO-A-98/52024
- DE-A- 4 115 414

## Beschreibung

Die Erfindung betrifft eine Anordnung zur Detektion biochemischer oder chemischer Substanzen mittels Fluoreszenzlichtanregung und Verfahren zur Herstellung einer solchen Anordnung. Die erfindungsgemäße Anordnung ist auf verschiedenen Gebieten, wie z.B. in der Biotechnologie, der Molekularmedizin, bei der Pharmaentwicklung und auch bei der Analyse verschiedener chemischer Substanzen einsetzbar.

Seit geraumer Zeit werden die verschiedensten optischen Verfahren und Systeme z.B. bei der Erforschung verschiedener biologischer Systeme und Prozesse, in der Mikrobiologie, der Molekularmedizin eingesetzt. Dabei werden häufig Spektrometer verwendet, die einen relativ hohen Informationsgehalt mit entsprechend hoher Genauigkeit bei ihrer Anwendung ermöglichen. Spektrometer sind jedoch für viele auftretenden Routineuntersuchungen ungeeignet, da eine aufwendige Präparation der einzelnen Proben erforderlich ist, die für die Messungen benötigten Zeiten zu lang sind und zur Denaturierung der Proben führen können.

Für viele Anwendungsfälle sind Lösungen gefordert, mit denen eine schnelle, genaue und preiswerte Analyse einer sehr großen Anzahl von Proben (in einer Gröβenordnung von ca. 10⁶) durchgeführt werden können. Solche Anwendungen sind beispielsweise DNA-Bibliotheken.

Für die Analyse bzw. Detektion wurden bisher verschiedene Meßverfahren angewendet. So wurde beispielsweise die Absorptionsänderung, die Brechzahländerung oder das angeregte Fluoreszenzlicht bestimmt. Bei der Messung der Intensität von Fluoreszenzlicht kann das Anregungslicht und das modifizierte Fluoreszenzlicht parallel oder senkrecht zueinander geleitet werden. Werden die beiden verschiedenen Lichtarten senkrecht zueinander geleitet, wird die Ausbildung eines evaneszenten Feldes an einem Wellenlichtleiter ausgenutzt. Diese Form wird z.B. für den Nachweis von Antigen-Antikörper-Reaktionen ausgenutzt. Bei diesen sogenannten "solid-phase fluoroimmunoassays" werden nachweisspezifische Antikörper auf einer Sensoroberfläche immobilisiert. Der Analyt (Antigen) wird an einen entsprechenden Antikörper gebunden und kann dann, entweder direkt oder unter Verwendung eines Markierungsstoffes durch das evaneszente Feld fluoresziert, nachgewiesen werden. Die Anregung der Fluoreszenz durch das evaneszente Feld eines Wellenleiters bietet den Vorteil, daß die Eindringtiefe des evaneszenten Feldes begrenzt ist (ca. 100 bis 200 nm) und dadurch lediglich die direkt an der Sensorfläche gebundenen Analyten oder Markierungsstoffe angeregt werden. Das führt dazu, daß die meßbare Intensität des Fluoreszenzlichtes ein direktes Maß für die Anzahl bzw. den Anteil an gebundenem Analyt bzw. Markierungsstoff ist und aus diesem Grunde auf zusätzliche Spülvorgänge, um ungebundene Markierungsstoffmoleküle zu entfernen, verzichtet werden kann.

Für solche Lichtwellenleiter können sowohl Lichtleitfasern als auch Schichtwellenleiter eingesetzt werden. Lichtleitfasern haben den Vorteil, daß entsprechende Sensoren bzw. Vorrichtungen einfach und kostengünstig herstellbar sind. Sie können an nahezu beliebigen und auch schwer zugänglichen Orten eingesetzt werden und die Meßsignale sind über bestimmte Entfernungen ohne weiteres optisch übertragbar. So ist es beispielsweise aus US 4,447,546 und US 4,909,990 bekannt, daß Lichtleitfasern für entsprechende Verfahren zwar prinzipiell einsetzbar sind, in der Regel jedoch ebene Schichtwellenleiter verwendet werden.

Die ebenen Schichtwellenleiter haben den Vorteil, daß die verschiedensten zur Analyse anstehenden Substanzen und gegebenenfalls erforderliche Immobilisierungsschichten einfach aufgebracht und strukturiert werden können. Mögliche Verfahren hierzu sind z.B. Schleudern, Gießen, Sputtern oder bekannte Vakuumbedampfungsverfahren. Außerdem können mehrere einzelne Sensoren aus einer einzigen großen Platte hergestellt werden, wobei die so hergestellten Sensoren nahezu gleiche Eigenschaften aufweisen. Ein weiterer Vorteil solcher Sensorstrukturen besteht darin, daß sie sehr stabil und demzufolge auch gut handhabbar sind. Es können die verschiedensten Schichtmaterialien einfach aufgebracht und strukturiert werden. Dabei können die verschiedensten Metalle, Gläser und Polymere eingesetzt werden.

Ebene plattenförmige Gebilde können ohne weiteres in Nachweisgeräte eingesetzt und dort die optischen Meßverfahren durchgeführt werden.

Die Herstellung und Strukturierung solcher ebenen Gebilde ist durch den Vorlauf aus der Mikroelektronikfertigung bewährt und demzufolge auch mit relativ geringen Kosten verbunden.

Biologische Sensorstrukturen, die die Ausbildung evaneszenter Felder für die Fluoreszenzlichtanregung ausnutzen, sind beispielsweise von S. Sjölander und C. Urbaniczky: Integrated Fluid Handling System for Biomolekular Analysis, Anal. Chem., 63 81991) 2338-2345 und R. Cush et al: The resonant mirror: a novel optic biosensor for direct sensing of biomolecular interactions. Part 1: priciples of operation and associated instrumentation. Biosensors Bioelectron., 8 (1993) 347 - 353 und J.E. Fletcher et al: A Rapid, Biosensor-based, assay for PSA in Whole Blood, Tumor Marker Update Vol. 5, No. 5 (1993). So liegen die Nachweisgrenzen, bei dem von S. Sjölander und C. Urbaniczky beschriebenen Sensor bei 0,5 ng/ml (FCFD).

Eine weitere Vorrichtung für den Fluoreszenznachweis biologischer Reaktionen mittels Evaneszenzfeldanregung eines Schichtwellenleiters ist in WO 94/27137 beschrieben, wobei dort eine Nachweisgrenze bei Verwendung eines Referenzkanals bei 10⁻¹³ molaren Lösungen liegt.

Bei dieser Lösung wird ein planarer Wellenleiter verwendet, an dessen Oberfläche voneinander getrennte Felder vorgesehen sind, auf bzw. in denen Fängermoleküle immobilisiert sind und für die verschiedenen Felder auch verschiedene Proben mittels Evaneszenzfeldanregung in Form von Fluoreszenzimmunoassys bestimmt werden können. Dabei wird das Licht zwingend über eine Stirnfläche des planaren Wellenleiters, in einer bevorzugten Ausführung über eine linsenförmige Ausbildung dieser Stirnfläche, in den planaren Wellenleiter eingekoppelt und an der Grenzfläche das evaneszente Feld ausgebildet und Fluoreszenz angeregt. Das Fluoreszenzlicht tritt an der gegenüberliegenden Seite des Wellenleiters aus und kann mit den üblichen Detektoren gemessen werden, wobei die Strahlführung mit verschiedenen optischen Elementen beeinflußt werden kann. Dadurch treten zwei wichtige Nachteile auf, die die Meßempfindlichkeit, wie bereits erwähnt, negativ beeinflussen. Zum einen ist eine Beeinflussung des Fluoreszenzlichtes verschiedener Proben, die in den Feldern enthalten sind, nicht auszuschließen, da eine vollständige optische Trennung nicht möglich ist und zum anderen treten Probleme durch die ausschließliche Einkopplung des Lichtes über die Stirnseite des Wellenleiters auf, so daß größere Lichtverluste in Kauf genommen werden müssen.

Zur Verringerung des Streulichteinflusses wird dort zwar die Verwendung von entsprechenden optischen Filtern vorgeschlagen, die jedoch ebenfalls Fluoreszenzlichtverluste hervorrufen und die bereits erwähnte Beeinflussung des Fluoreszenzlichtes der verschiedenen Proben nicht vollständig verhindern können.

In der EP 0 519 622 A2 ist eine andere Vorrichtung zur Durchführung von Assays durch Evaneszentfeldanregung beschrieben, bei der ein schalenförmiger Sensor verwendet werden soll, wobei das Licht für die Fluoreszenzanregung über eine ebene oder gewölbte Fläche des schalenförmigen Sensors in die Mantelfläche des Sensors eingekoppelt und die Fluoreszenz in der auf die äußere Mantelfläche des Sensors aufgebrachten Probe angeregt wird. Das Fluoreszenzlicht gelangt wieder über die Mantelfläche des schalenförmigen Sensors und die ebene bzw. gewölbte Fläche, über die das Anregungslicht in die Mantelfläche des Sensors eingekoppelt wird, über ein optisches System zu einem Detektor, mit dem die Intensität des Fluoreszenzlichtes bestimmt werden kann. Dabei wird nach einem Ausführungsbeispiel das Anregungslicht über einen halbdurchlässigen Spiegel in den Sensor eingekoppelt und das Fluoreszenzlicht durch den halbdurchlässigen Spiegel auf den Detektor gerichtet. Mit einer solchen Vorrichtung kann prinzipiell gleichzeitig nur eine einzige Probe detektiert werden.

In WO 95/03538 ist ein optischer Biosensor beschrieben, bei dem eine Lochplatte, deren Löcher in einer Matrixanordnung ausgebildet sind, in Verbindung mit einem planaren Wellenleiter und einer Grundplatte beschrieben. Das Licht einer Lichtquelle wird auf die Grundplatte gerichtet und über den Löchern der Lochplatte ausgebildete Beugungsgitter in den Wellenleiterfilm eingekoppelt. Durch die in den Löchern aufgenommenen Proben tritt eine Änderung des Brechungsindex des Wellenleiterfilms auf, der zu einer Veränderung des des Winkels des austretenden Lichtes führt, die als Meßwert ausgenutzt wird.

In der DE 41 15 414 A1 ist ein miniaturisiertes Chemo- und Biosensorelement mit ionenselektiver Membran beschrieben, das in einem Siliciumsubstrat sich verjüngende Öffnungen aufweist und in das so erhaltene Containment eine Flüssigkeit, mit der eine ionenselektive Membran ausgebildet werden kann, eingefüllt wird.

Die Lösungen, die von S. Sjölander und C. Urbaniczky sowie R. Cush et al beschrieben worden sind, weisen Brechzahländerungen nach, die durch eine Anlagerung von Analyten an einer Oberfläche hervorgerufen werden. Die gemessene Brechzahländerung beinhaltet jedoch nicht ausschließlich die jeweils zu untersuchende Anlagerung und die erreichbare Selektivität ist demzufolge nicht in jedem Fall gegeben. Für die entsprechend durchgeführten Messungen ist ein sehr hoher apparativer Aufwand erforderlich, der sich auch in relativ hohen Kosten widerspiegelt. Untersuchungen mehrerer Proben, die gleichzeitig durchgeführt werden können, ist nicht möglich.

Bei dem von J.E. Fletcher et al beschriebenen Biosensor bewirkt die relativ großflächige Anregung der Fluoreszenz und deren evaneszentes Einkoppeln in einen Schichtwellenleiter im FCFD eine relativ geringe Empfindlichkeit.

In EP 0 723 146 A1 und EP 0 194 132 A2 sind weitere Möglichkeiten zur Detektion biochemischer oder chemischer Substanzen mittels Fluoreszenzlichtanregung beschrieben, wobei in beiden Fällen auch die Anordnung verschiedener Proben in einer vorgegebenen Systematik und deren Auswertung beschrieben sind. Dabei werden in EP 0 723 146 A1 Beispiele beschrieben, bei denen verschiedene Proben benachbart zueinander immobilisiert werden und zur Auswertung CCD's bzw. einzelne Linsen in einer entsprechend der Probenanordnung ausgebildeten Anordnung verwendet.

Des weiteren ist aus WO 94/25855 A1 ein Verfahren zur Messung von Lumineszenz einer großen Anzahl von Proben auf einer kontinuierlichen Matrix bekannt.

In US 4,728,792 ist eine mikroporöse Sorptionsplatte für eine Vielzahl von Proben beschrieben und die Proben sollen innerhalb der Platte zumindest teilweise durch Barrieren aus einem dämpfenden Material getrennt sein.

Des weiteren ist aus WO 98/52024 A1 eine Fluoreszenzsensoreinrichtung bekannt, bei der die Anwesenheit oder Konzentration eines Analyten in einem flüssigen oder gasförmigen Medium bestimmt werden kann. Hierbei ist eine LED mit einem Hohlraum, der mit einer einen fluoreszierenden Stoff enthaltenden polymeren Matrix gefüllt ist, als Sensoreinheit auf einem Substrat angeordnet.

Die Aufgabe der Erfindung besteht darin, eine Möglichkeit zu schaffen, mit der relativ einfach und mit hoher Genauigkeit die Detektion an einer großen Anzahl von Proben in sehr kurzer Zeit durchgeführt werden kann.

Erfindungsgemäß wird diese Aufgabe durch die Merkmale des Anspruchs 1 gelöst.

Die erfindungsgemäße Anordnung besteht im Wesentlichen aus einem plattenförmigen Substrat, das zur Detektion mehrerer Proben lokal strukturiert ist, wobei die Strukturierung bevorzugt in Form eines zweidimensionalen Arrays, wie sie beispielsweise von den bekannten Mikrotiterplatten bekannt ist, ausgebildet werden soll.

Entsprechend der im Substrat oder der nur in einer Pufferschicht ausgebildeten Strukturierung kann detektorseitig ein Linsenarray aufgesetzt werden, wobei die Strukturierung und auch das Linsenarray sehr klein ausgebildet sein können, so daß auf einem kleinflächigen Substrat eine große Anzahl von auf verschiedenen Proben aufgebracht und detektiert werden können. An Stelle des Linsenarrays kann aber auch eine der Strukturierung angepaßte Linse, z.B. eine Fresnellinse hierfür verwendet werden. Auf der dem Linsenarray abgewandten Seite des Substrates kann eine Pufferschicht und ein entsprechend der im Substrat eingearbeiteten Strukturierung ausgebildetes Wellenleiterarray aufgebracht werden.

Jede der im Substrat eingearbeiteten Mikrostruktur definiert einen Fluoreszenzanregungs- und -nachweiskanal für jeweils eine der zu detektierenden Proben.

Für die Anregung des Fluoreszenzlichtes bestehen prinzipiell zwei Möglichkeiten, so kann einmal das evaneszente Feld in einem Wellenleiterarray ausgebildet werden, das auf der Seite des Substrates ausgebildet ist, die der Detektorseite gegenüberliegt. Die zweite Möglichkeit der Anregung besteht darin, das Anregungslicht über das der Strukturierung im Substrat angepaßte Linsenarray auf die einzelnen Proben zu richten, wobei in jedem Fall das Fluoreszenzlicht über das am Substrat detektorseitig angeordnete Linsenarray auf dem Detektor abgebildet werden kann. Der Detektor ist hierfür ebenfalls in Form eines Arrays, z.B. als CCD-Array ausgebildet, so daß das Fluoreszenzlicht jeder einzelnen Probe gesondert detektiert werden kann.

Für den Fall der Evaneszentfeldanregung besteht aber auch die Möglichkeit, auf das Linsenarray zu verzichten und dafür ein der Strukturierung angepaßtes Detektorarray auf das Substrat aufzusetzen bzw. an dieses so anzordnen, daß die verschiedenen Proben selektiv detektiert werden können.

Die Strukturierung der Substrate, die beispielsweise aus der Halbleitertechnik bekannte Formate von 4''x 4'' aufweisen können, sind mit den dort bekannten Bearbeitungsverfahren für Silicium einfach und kostengünstig herstellbar, dabei kann auf einem solchen Substrat eine Mikrostrukturierung erreicht werden, die eine Probenanzahl von bis zu 10⁶/cm² ermöglicht.

Das erfindungsgemäß zu verwendende Substrat kann vorteilhaft sichern, daß die verschiedensten Fluoreszenzlichtsignale, die mit dem Detektorarray ausgewertet werden sollen, sich nicht gegenseitig beeinflussen bzw. überlagern, so daß jeder Probe ein eindeutiger Meßwert ohne Störgrößen zugeordnet werden kann. Hierfür besteht das Substrat bevorzugt aus einem Material, das bei der/den Lichtwellenlängen des Fluoreszenzlichtes dieses absorbiert. Für die gleiche Wirkung besteht jedoch die Möglichkeit, die jeweiligen Wandungen in der Strukturierung des Substrates reflektierend auszubilden, so daß dieser unerwünschte Effekt vermieden werden kann.

Die bevorzugte Strukturierung im Substrat, durch Ausbildung von pyramiden- oder kegelförmigen oder auch senkrechten Durchbrüchen hat weiter den Vorteil, daß das Fluoreszenzlicht günstig reflektiert und dadurch gesammelt in Richtung auf das Linsenarray und demzufolge auch auf die jeweiligen Detektoren gerichtet werden kann.

Mit der erfindungsgemäßen Anordnung ist die Detektion von Molekülkonzentrationen, die 10⁻¹² molar oder geringer sind, in großer Anzahl für verschiedene Proben in sehr kurzer Zeit möglich. Außerdem kann das anregende Licht exakt definiert auf die jeweilige Probe gerichtet und das jeweils entsprechende Fluoreszenzlicht, bei weitestgehender Vermeidung von streulichtanteilen oder anderen Störgrößen direkt auf den jeweiligen einer einzigen Probe zugeordneten Detektor gerichtet und der entsprechende Analyt gegebenenfalls auch quantitativ bestimmt werden.

Mit der erfindungsgemäßen Lösung kann nicht nur eine verbesserte ortsaufgelöste Messung durchgeführt werden, es besteht optional die Möglichkeit mit einer entsprechenden zeitlich steuerbaren Detektoranordnung (z.B. triggerbare CCD-Kamera und elektronische Verzögerungseinheit) auch zeitaufgelöste Messungen durchzuführen.

Nachfolgend soll die Erfindung anhand von Ausführungsbeispielen näher beschrieben werden.

Dabei zeigen:
- Figur 1: ein Ausführungsbeispiel einer erfindungsgemäßen Anordnung mit Fluoreszenzanregung über evaneszentes Feld;
- Figur 2: ein zweites Ausführungsbeispiel einer erfindungsgemäßen Anordnung mit Fluoreszenzanregung über Mikrolinsenarray;
- Figur 3a: eine Anordnung nach Figur 1 mit und ohne Linsenarray; Probe auf der umstrukturierten Seite;
- Figur 3b: eine Anordnung mit bis zur Wellenleiterschicht reichenden Durchbrüchen mit und ohne Linsenarray, und Proben in Durchbrüchen;
- Figur 4a: eine Anordnung mit zusätzlicher Zwischenschicht und unterhalb von Wellenleiter und Substrat angeordneten Proben;
- Figur 4b: eine Anordnung mit zusätzlicher Zwischenschicht und oberhalb des/der Wellenleiter angeordneten Proben und
- Figur 5: eine Anordnung mit einer strukturierten Pufferschicht.

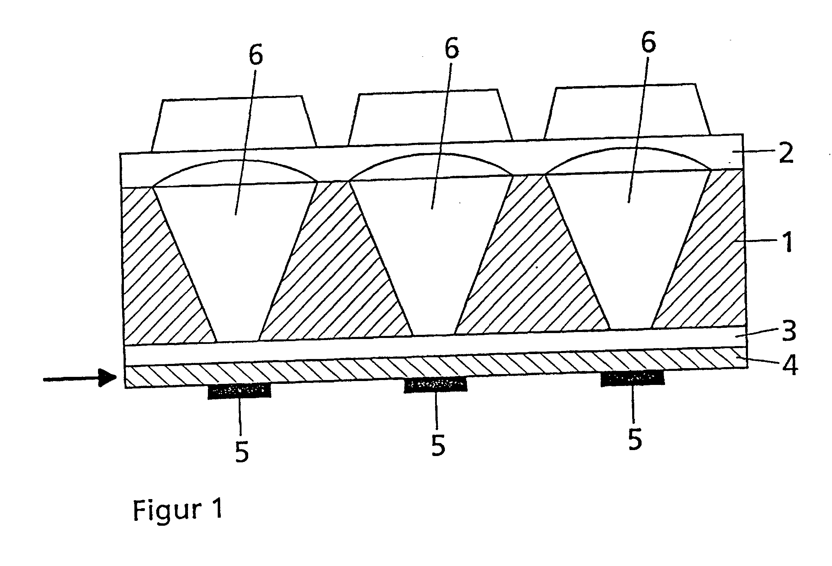

Bei dem in der Figur 1 dargestellten Beispiel einer erfindungsgemäßen Anordnung wird ein Siliciumsubstrat 1, z.B. ein bekannter Siliciumwafer verwendet, der einseitig mit einem Schichtpaket aus dotiertem Siliciumdioxid oder einem anderen Silikat versehen wird, dargestellt. Dabei besteht das Schichtpaket aus einer Pufferschicht 3 und einer Wellenleiterschicht 4.

Auf der entgegengesetzten Seite, also der Seite, die zu einem nicht dargestellten Detektorarray weist, Durchbrüche 6 in Form eines regelmäßigen Arrays im Substrat 1 ausgebildet. Die Durchbrüche 6 können z.B. durch anisotropes Ätzen in das Siliciumsubstrat 1 eingebracht werden, wobei das Siliciumdioxid als Ätzstoppschicht wirkt und demzufolge die Durchbrüche 6 an der Siliciumdioxidschicht, also an der Pufferschicht 3 enden.

Die Durchbrüche 6 können dabei Pyramiden- und Kegelform oder auch Quaderform aufweisen, und dienen zur Trennung der verschiedenen Fluoreszenzlichtstrahlen für die jeweiligen Proben 5, die unterhalb der Wellenleiterschicht 4 den Durchbrüchen 6 zugeordnet und bevorzugt unter Verwendung von jeweils selektiven Immobilisierungsschichten aufgebracht sind. Die Proben 5 können dabei, je nachdem, sowohl flüssige als auch feste Konsistenz aufweisen.

Erfolgt die Fluoreszenzanregung über das evaneszente Feld der Wellenleiter 4, wird das Fluoreszenzlicht für jede Probe 5 durch die entsprechende Durchbrechung 6 über eine der Linsen des Linsenarrays 2 auf einen Detektor eines Detektorarrays gerichtet, wobei jeweils ein Einzeldetektor des Detektorarrays einer Probe 5 zugeordnet ist und demzufolge die Intensität einer Fluoreszenz für jeweils eine Probe 5 gemessen werden kann.

Neben Silicium können auch andere Substratmaterialien, wie z.B. verschiedene Polymere eingesetzt werden, die beispielsweise eingefärbt sind und so das Fluoreszenzlicht aus verschiedenen Proben absorbiert wird, so daß Übersprechen zwischen den Nachweiskanälen vermieden werden kann. Bei beispielsweise polymeren Substratmaterialien kann deren Strukturierung neben Ätzverfahren (Trockenätzverfahren) auch durch eine entsprechende Laserbearbeitung oder mittels Replikationstechniken erfolgen.

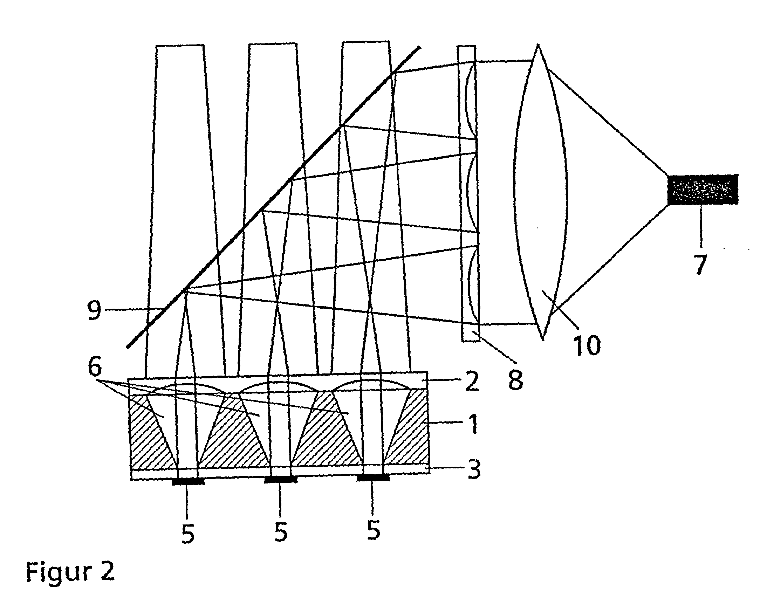

Bei dem in der Figur 2 dargestellten Beispiel einer erfindungsgemäßen Anordnung wird wiederum ein Substrat 1 mit einer Pufferschicht 3 versehen, an der verschiedene Proben 5 den jeweiligen Durchbrüchen 6 zugeordnet immobilisiert werden können. Innerhalb des Substrates 1, also wieder in Richtung auf den nicht dargestellten Detektor weisend, ist ein Linsenarray 2 mit jeweils einer einem Durchbruch 6 zugeordneter Einzellinse aufgesetzt, mit der Hilfe das Fluoreszenzlicht auf jeweils einen Detektor des Detektorarrays gerichtet werden kann.

Die Fluoreszenzanregung erfolgt durch Anwendung mindestens einer Lichtquelle 7, die bevorzugt ein Laser oder eine Laserdiode sein kann.

Erfolgt die Fluoreszenzanregung über ein Mikrolinsenarray, gelangt das Licht der Lichtquelle 7 über eine Optik 10 auf ein zweites Linsenarray 8 und wird von dort über einen halbdurchlässigen Spiegel 9 durch jeweils einen Durchbruch 6 auf eine einzelne Probe 5 gerichtet. Das Fluoreszenzlicht der jeweiligen Probe 5 kann den halbdurchlässigen Spiegel 9 in Richtung auf das nicht dargestellte Detektorarray passieren. Die Anzahl der einzelnen Linsen in den beiden Linsenarrays 2 und 8 ist identisch, wobei die Anordnung der einzelnen Linsen im Linsenarray 8 genau so gewählt wird, daß jeweils Licht, das durch eine Linse des zweiten Linsenarrays 8 über den halbdurchlässigen Spiegel 9 genau durch eine Durchbrechung 6 in Richtung auf eine Probe 5 zur Fluoreszenzlichtanregung gerichtet werden kann.

Bei Bedarf können jedoch auch zwei Lichtquellen eingesetzt werden, die Licht unterschiedlicher Wellenlänge bzw. unterschiedlichen Wellenlängenspektrums aussenden, wobei hierfür günstigerweise jeweils getrennte zweite Lichtwellenarrays 8 verwendet werden.

Es besteht aber auch die Möglichkeit, vor bzw. nach den einzelnen Linsen der Linsenarrays 2 und 8 Filter und/oder Polarisatoren einzusetzen, um den Fehlereinfluß weiter zu verringern.

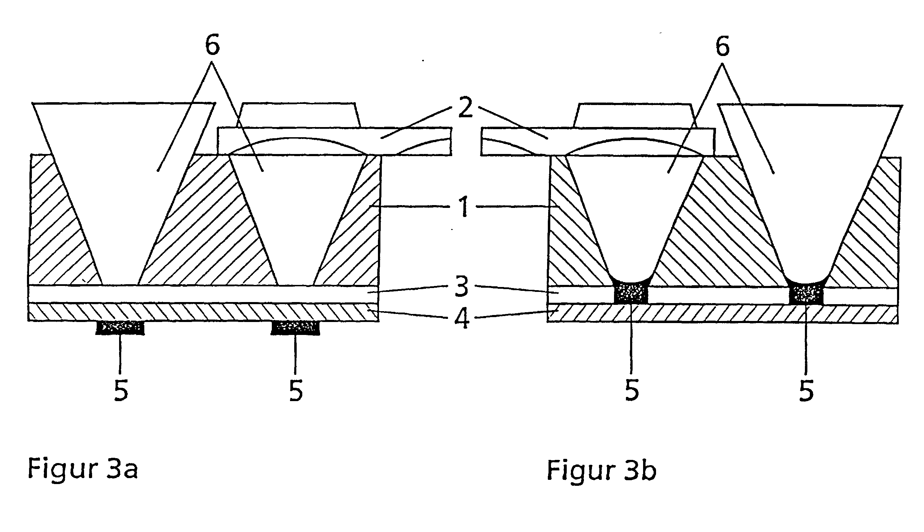

Die in den Figuren 1 und 3a gezeigte Anordnung mit der Wellenleiterschicht 4 wird in einem zusätzlichen Arbeitsgang, der von der Herstellung der Durchbrüche 6 unabhängig ist, mit einem Beschichtungs-, Maskierungs- und Strukturierungsprozeß behandelt, so daß ein Streifenwellenleiterarray entsteht, dessen Struktur an die im Substrat 1 ausgebildete Struktur mit den Durchbrüchen 6 angepaßt ist.

Im Nachgang hierzu können dann unterschiedliche selektive Immobilisierungsschichten, den verschiedenen Durchbrüchen 6 zugeordnet, aufgebracht werden, so daß jeweils unterschiedliche Analyten immobilisiert und detektiert werden können.

Vorteilhaft kann eine solche modifizierte Sensorfläche den Abfluß einer Durchflußmeßzelle bilden, durch die Proben- und Referenzlösung eingebracht werden können.

Ein weiteres Beispiel für eine erfindungsgemäße Anordnung ist in der Figur 3b gezeigt. Bei diesem Beispiel wurde auch die Siliciumdioxidpufferschicht 3 durchgeätzt und es entstanden Hohlräume für die Aufnahme von Proben. Dabei ist die Wellenleiterschicht 4 am Boden der jeweiligen Durchbrüche 6 mit einer Immobilisierungsschicht für die verschiedenen Substanzen (Biomoleküle) versehen. In die Durchbrüche 6 können z.B. mit einer bekannten Pipettiervorrichtung die jeweiligen Proben eingebracht werden und die Fluoreszenzanregung so erfolgen, wie dies bei der Beschreibung der Figur 2 der Fall ist.

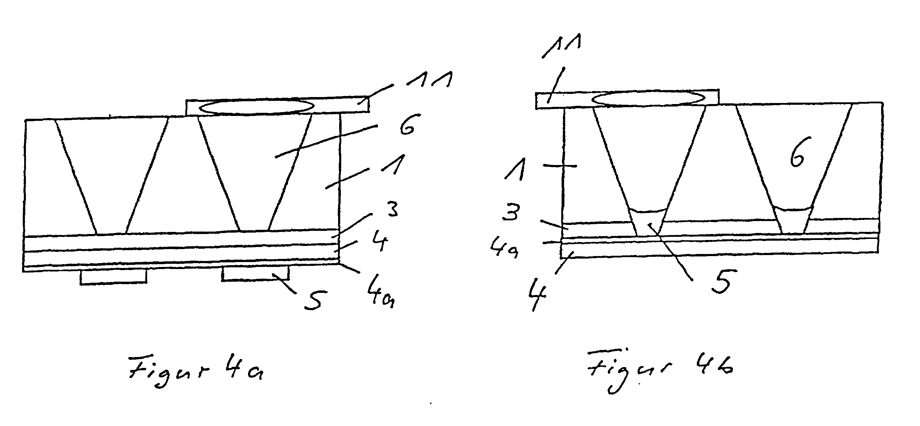

In den Figuren 4a und 4b sind mögliche Varianten für die Anordnung einer zusätzlichen Zwischenschicht 4a dargestellt, die die Immobilisierung der Proben verbessern sollen. Eine solche Zwischenschicht 4a ist aus einem für das Anregungslicht transparenten Material und wird mit einer kleinen Dicke (ca. 10 bis 50 nm) ausgebildet, die sicherstellt, daß die Ausbildung des evaneszenten Feldes nicht oder nur sehr geringfügig beeinflußt wird.

Geeignete Materialien sind z.B. Silikat, Quartz, die mit dem gleichen Verfahren aufgebracht werden können, mit dem auch die Wellenleiter ausgebildet werden. Es können aber auch optisch und biologisch bzw. chemisch geeignete Polymere als Zwischenschichtmaterial verwendet werden.

Bei dem Beispiel nach Figur 4b, kann eine solche Zwischenschicht 4a, in nicht dargestellter Weise, auch als dünner Flüssigkeitsfilm in den Durchbrechungen 6 im Substrat 1 unmittelbar zwischen Pufferschicht 3 und Probe 5 ausgebildet werden.

In der Darstellung nach Figur 4a sind die Proben 5 unterhalb der Wellenleiter 4 angeordnet, wobei die zusätzliche Zwischenschicht 4a zwischen den Proben 5 und Wellenleiter 4 ausgebildet ist. Darüber sind wieder Pufferschicht 3 und strukturiertes Substrat 1 vorhanden. Bei diesem Beispiel ist eine Mikrooptik 11 optional über dem strukturierten Substrat 1 vor dem nicht dargestellten Detektor angeordnet.

Beim in der Figur 4b gezeigten Beispiel sind die Proben 5 in den Durchbrüchen 6 des Substrates 1 aufgenommen und zwischen Proben 5 und Pufferschicht 3 die Zwischenschicht 4a angeordnet.

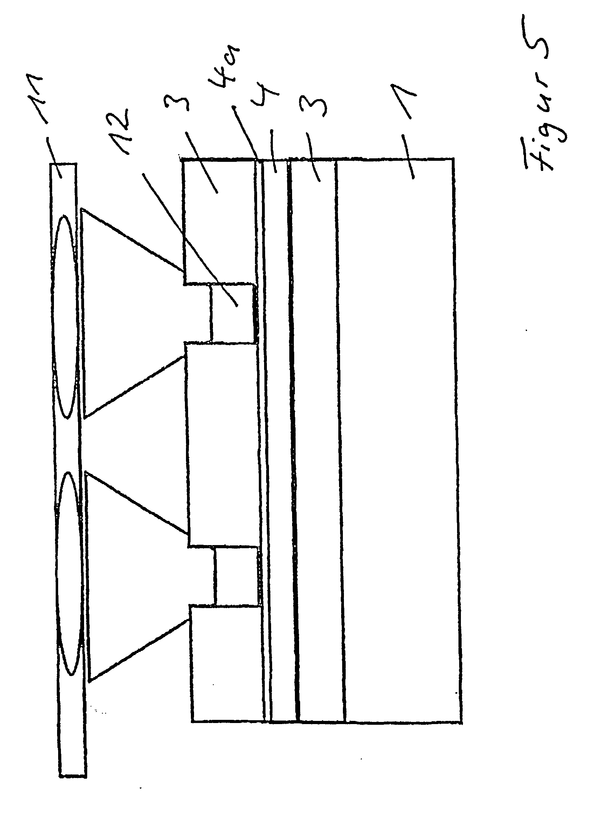

Das in Figur 5 dargestellte Beispiel verwendet eine strukturierte Pufferschicht 3a, in der Durchbrüche 12 ausgbelildet sind. Die Proben 5 können in diesen Durchbrüchen 12 wieder auf der zusätzlichen Zwischenschicht 4a immobilisiert werden. Der übrige Teil der entsprechenden Anordnung ist hier wieder aus den Einzelelementen Substrat 1 (auf das ggf. verzichtet werden kann), Wellenleiter 4 und Pufferschicht 3 gebildet, wobei hier das Substrat unstrukturiert sein kann.

Die mit den Durchbrüchen 12 versehene Pufferschicht 3a ist aus einem Material, das die Wellenleitung, wenn überhaupt nur geringfügig beeinflußt. Die Durchbrüche 12 sind so ausgebildet und dimensioniert, daß das evaneszente Feld der Wellenleiter 4 im Bereich der Zwischenräume zwischen den Durchbrüchen 12 die Oberfläche der Pufferschicht 3 nicht erreicht und eine Beeinflussung des Fluoreszenzlichtes ausgeschlossen ist. Die Fluoreszenzanregung kann, wie bereits beschrieben erfolgen, und das Fluoreszenlicht tritt mit einer entsprechenden Apertur aus den Durchbrüchen 12 aus und kann mit der hier gezeigten Mikrooptik 11 oder einem Linsenarray 2 bzw. einer strukturierten Linse auf ein nicht gezeigtes Detektorarray zur ortsaufgelösten Auswertung der einzelnen Fluoreszenzintensitäten, gerichtet werden.

## Patentansprüche

1. Anordnung zur Detektion biochemischer oder chemischer Substanzen mittels Fluoreszenzlichtanregung, bei der
ein plattenförmiges Substrat (1) oder eine Pufferschicht (3) zur Detektion verschiedener Proben (5) lokal definiert strukturiert ist,
**dadurch gekennzeichnet,**
**daß** die Strukturierung in Form von Durchbrüchen (6) als Fluoreszenznachweiskanal und/oder Fluoreszenzanregungskanal für jeweils eine zu detektierende Probe ausgebildet ist.

2. Anordnung nach Anspruch 1,
**dadurch gekennzeichnet, daß** verschiedene selektive Immobilisierungsschichten den verschiedenen Durchbrüchen (6) zugeordnet, aufgebracht sind.

3. Anordnung nach Anspruch 1 oder 2,
**dadurch gekennzeichnet, daß** die Durchbrüche (6) pyramiden- oder kegelförmig oder auch senkrecht und zumindest bis zu einer Pufferschicht (3) im Substrat (1) ausgebildet sind.

4. Anordnung nach einem der Ansprüche 1 bis 3,
**dadurch gekennzeichnet, daß** detektorseitig ein der Struktur entsprechend ausgebildetes Linsenarray (2) oder eine der Strukturierung angepaßte Linse zur Abbildung des Fluoreszenzlichtes der verschiedenen Proben (5) vor einem Detektorarray angeordnet ist.

5. Anordnung nach einem der Ansprüche 1 bis 3,
**dadurch gekennzeichnet, daß** ein entsprechend der Strukturierung des Substrates (1) entsprechend ausgebildetes Detektorarray auf das Substrat (1) aufgesetzt ist.

6. Anordnung nach einem der Ansprüche 1 bis 5,
**dadurch gekennzeichnet, daß** die Proben in den Durchbrüchen (6) oder auf der ebenen Seite der Anordnung gegenüber den Durchbrüchen (6) auf der Pufferschicht (3) oder einem Wellenleiter (4), die die Durchbrüche (6) einseitig überdecken, immobilisiert sind.

7. Anordnung nach einem der Ansprüche 1 bis 6,
**dadurch gekennzeichnet, daß** das Substrat (1) aus einem das Fluoreszenzlicht absorbierenden Material besteht oder an seiner Oberfläche für Fluoreszenzlicht reflektierend oder absorbierend ausgebildet ist.

8. Anordnung nach einem der Ansprüche 1 bis 7,
**dadurch gekennzeichnet, daß** die Wandungen der Durchbrüche (6) Fluoreszenzlicht reflektieren.

9. Anordnung nach einem der Ansprüche 1 bis 8,
**dadurch gekennzeichnet, daß** die Anregung der Fluoreszenz über das evaneszente Feld erfolgt.

10. Anordnung nach Anspruch 1,
**dadurch gekennzeichnet, daß** auf der einem Linsenarray (2) oder einer Linse abgewandten Seite des Substrates (1) ein Schichtpaket, bestehend aus einer Pufferschicht (3) und mindestens einem Wellenleiter (4) oder einem der Strukturierung angepaßten Wellenleiterarray (4) aufgebracht ist.

11. Anordnung nach einem der Ansprüche 1 bis 10,
**dadurch gekennzeichnet, daß** das Substrat (1) aus Silicium, Glas, glasartigem Material oder einem Polymer und die Pufferschicht (3) und der/die Wellenleiter (4) aus einem Silikat, Glas, glasartigem Material oder einem Polymer bestehen.

12. Anordnung nach einem der Ansprüche 1 bis 8,
**dadurch gekennzeichnet, daß** das Anregungslicht mindestens einer Lichtquelle (7) über ein zweites Linsenarray (8) oder eine der Strukturierung angepaßte zweite Linse durch ein erstes Linsenarray (2) oder eine erste der Strukturierung angepaßte Linse auf die Proben (5) gerichtet ist.

13. Anordnung nach einem der Ansprüche 1 bis 8,
**dadurch gekennzeichnet, daß** zwischen einem ersten und einem zweiten Linsenarray (2, 8) und/oder den Linsen ein halbdurchlässiger Spiegel (9) angeordnet ist.

14. Anordnung nach einem der Ansprüche 1 bis 13,
**dadurch gekennzeichnet, daß** auf dem Wellenleiter (4) eine für das Anregungslicht transparente Zwischenschicht (4a), mit einer kleinen Dicke, die die Evaneszentfeldanregung nahezu nicht beeinflußt, auf der die Proben immobilisieren, angeordnet ist.

15. Verfahren zur Herstellung einer Anordnung nach einem der Ansprüche 1 bis 14,
**dadurch gekennzeichnet,**
**daß** auf einer Seite eines Substrates (1) eine Pufferschicht (3) aufgebracht und im Substrat (1), ausgehend von der hierzu abgewandten Seite Durchbrechungen (6) zumindest bis zur Pufferschicht (3) ausgebildet werden.

16. Verfahren zur Herstellung einer Anordnung nach einem der Ansprüche 1 bis 14,
**dadurch gekennzeichnet, daß** auf einer Seite des Substrates (1) eine Puffer- und eine Wellenleiterschicht (3, 4) aufgebracht, im Substrat (1) ausgehend von der abgewandten Seite Durchbrechungen (6) zumindest bis zur Pufferschicht (3) ausgebildet werden und mit einem Strukturierungsverfahren ein Streifenwellenleiterarray (4) jeweils den Durchbrüchen (6) zugeordnet ausgebildet wird.

17. Verfahren nach Anspruch 15 oder 16,
**dadurch gekennzeichnet, daß** auf die Pufferschicht (3) oder die Streifenwellenleiterstruktur (4) verschiedene selektive Immobilisierungsschichten, den Durchbrüchen (6) zugeordnet, aufgebracht werden.

18. Verfahren nach Anspruch 16 oder 17,
**dadurch gekennzeichnet, daß** die Durchbrechungen (6) bis zur Streifenwellenleiterstruktur (4) ausgebildet und die verschiedenen Immobilisierungsschichten auf der Streifenwellenleiterstruktur (4) in den Durchbrüchen (6) aufgebracht werden.

## Claims

1. Arrangement for the detection of biochemical or chemical substances using fluorescent light excitation, in which
a laminar substrate (1) or a buffer layer (3) is structured in a locally defined way in order to detect different samples (5), **characterized in that** the structuring is created in the form of openings (6) as a fluorescence detection channel and/or fluorescence excitation channel for each sample to be detected.

2. Arrangement according to Claim 1, **characterized in that** different selective immobilizing layers assigned to the various openings (6) are applied.

3. Arrangement according to Claim 1 or 2, **characterized in that** the openings (6) are formed as pyramids or cones, or in upright form, in the substrate (1) and at least as far as a buffer layer (3).

4. Arrangement according to one of Claims 1 to 3, **characterized in that**, on the detector side, a lens array (2) formed so as to correspond to the structure or a lens matched to the structuring is arranged in front of a detector array in order to concentrate the fluorescent light from the various samples (5).

5. Arrangement according to one of Claims 1 to 3, **characterized in that** a detector array formed so as to correspond to the structuring of the substrate (1) is placed on the substrate (1).

6. Arrangement according to one of Claims 1 to 5, **characterized in that** the samples are bound in the openings (6) or facing the openings (6) on the flat side of the arrangement on the buffer layer (3) or a waveguide (4), which cover the openings (6) on one side.

7. Arrangement according to one of Claims 1 to 6, **characterized in that** the substrate (1) consists of a material that absorbs fluorescent light, or is designed so as to reflect or absorb fluorescent light at its surface.

8. Arrangement according to one of Claims 1 to 7, **characterized in that** the walls of the openings (6) reflect fluorescent light.

9. Arrangement according to one of Claims 1 to 8, **characterized in that** the fluorescence is excited using an evanescent field.

10. Arrangement according to Claim 1, **characterized in that** a layer sequence, consisting of a buffer layer (3) and at least one waveguide (4) or a waveguide array (4) matched to the structuring, is applied on the other side of the substrate (1) from a lens array (2) or a lens.

11. Arrangement according to one of Claims 1 to 10, **characterized in that** the substrate (1) consists of silicon, glass, vitreous material or a polymer, and the buffer layer (3) and the waveguide or guides consist of a silicate, glass, vitreous material or a polymer.

12. Arrangement according to one of Claims 1 to 8, **characterized in that** the excitation light from at least one light source (7) is directed at the samples (5) via a second lens array (8) or a second lens matched to the structuring through a first lens array (2) or a first lens matched to the structuring.

13. Arrangement according to one of Claims 1 to 8, **characterized in that** a semisilvered mirror (9) is arranged between a first and a second lens array (2, 8) and/or the lenses.

14. Arrangement according to one of Claims 1 to 13, **characterized in that** an interlayer (4a) which is transparent to the excitation light, has a small thickness, essentially does not affect the evanescent field excitation and on which the samples are immobilized, is arranged on the waveguide (4).

15. Process for the production of an arrangement according to one of Claims 1 to 14, **characterized in that** a buffer layer (3) is applied on one side of the substrate (1), and openings (6) are formed in the substrate (1) at least as far as the buffer layer (3), starting from the opposite side.

16. Process for the production of an arrangement according to one of Claims 1 to 14, **characterized in that** a buffer layer and waveguide layer (3, 4) are applied on one side of the substrate (1), openings (6) are formed in the substrate (1) at least as far as the buffer layer (3) starting from the opposite side, and a strip waveguide array (4) respectively assigned to the openings (6) is formed using a structuring process.

17. Process according to Claim 15 or 16, **characterized in that** different selective binding layers, assigned to the opening (6), are applied on the buffer layer (3) or the strip waveguide structure (4)

18. Process according to Claim 16 or 17, **characterized in that** the openings (6) are formed as far as the strip waveguide structure (4), and the different binding layers are applied on the strip waveguide structure (4) in the openings (6).

## Revendications

1. Dispositif pour la détection de substances biochimiques ou chimiques au moyen d'une excitation de lumière de fluorescence, dans lequel un substrat en forme de plaquette (1) ou une couche tampon (3) est structurée d'une manière définie localement pour la détection de différents échantillons (5), **caractérisé en ce que** la structuration est agencée sous la forme de perçages (6) en tant que canal de détection de fluorescence et/ou en tant que canal d'excitation de fluorescence pour respectivement un échantillon à détecter.

2. Dispositif selon la revendication 1, **caractérisé en ce que** différentes couches sélectives d'immobilisation sont prévues d'une manière associée aux différents passages traversants (6).

3. Dispositif selon la revendication 1 ou 2, **caractérisé en ce que** les passages traversants (6) sont agencés avec une forme de pyramide ou de cône ou également sont disposés perpendiculairement et au moins jusqu'à une couche tampon (3) dans le substrat (1).

4. Dispositif selon l'une des revendications 1 à 3, **caractérisé en ce que**, côté détecteur, un réseau de lentilles (2), qui est agencé d'une manière correspondant à la structure, ou une lentille adaptée à la structuration servant à former l'image de la lumière de fluorescence des différents échantillons (5) est disposé devant un réseau de détecteurs.

5. Dispositif selon l'une des revendications 1 à 3, **caractérisé en ce qu'**un réseau de détecteurs (8), agencé d'une manière qui correspond à la structuration du substrat (1), est disposé sur le substrat (1).

6. Dispositif selon l'une des revendications 1 à 5, **caractérisé en ce que** les échantillons sont immobilisés dans les passages traversants (6) ou sur le côté plat des dispositifs à l'opposé des passages traversants (6) sur la couche tampon (3) ou sur un guide d'ondes (4), que les passages traversants (6) recouvrent d'un côté.

7. Dispositif selon l'une des revendications 1 à 6, **caractérisé en ce que** le substrat (1) est constitué par un matériau absorbant la lumière de fluorescence ou est agencé de manière à réfléchir et absorber la lumière de fluorescence au niveau de sa surface.

8. Dispositif selon l'une des revendications 1 à 7, **caractérisé en ce que** des parois des passages traversants (6) réfléchissent la lumière de fluorescence.

9. Dispositif selon l'une des revendications 1 à 8, **caractérisé en ce que** l'excitation de la fluorescence s'effectue au moyen du champ évanescent.

10. Dispositif selon la revendication 1, **caractérisé en ce que** sur le côté du substrat (1) tourné à l'opposé d'un réseau de lentilles (2) ou d'une lentille, est disposé un paquet de couches constitué par une couche tampon (3) et au moins un guide d'ondes (4) ou un réseau (4) de guides d'ondes, adapté à la structuration.

11. Dispositif selon l'une des revendications 1 à 10, **caractérisé en ce que** le substrat (1) est réalisé en silicium, en verre, en un matériau similaire au verre ou en un polymère, et la couche tampon (3) et le/les guides d'ondes (4) sont constitués par un silicate, du verre, un matériau semblable au verre ou un polymère.

12. Dispositif selon l'une des revendications 1 à 8, **caractérisé en ce que** la lumière d'excitation d'au moins une source de lumière (7) est dirigée par l'intermédiaire d'un second réseau de lentilles (8) ou d'une seconde lentille adaptée à la structuration, sur les échantillons (5) à travers un premier réseau de lentilles (2) ou d'une première lentille adaptée à la structuration.

13. Dispositif selon l'une des revendications 1 à 8, **caractérisé en ce qu'**un miroir semi-transparent (9) est disposé entre les premier et second réseaux de lentilles (2, 8) et/ou entre les lentilles.

14. Dispositif selon l'une des revendications 1 à 13, **caractérisé en ce que** sur le guide d'ondes (4) est disposée une couche intermédiaire (4a), qui est transparente pour la lumière d'excitation et possède une faible épaisseur, qui n'influe presque pas sur l'excitation du champ évanescent et sur laquelle les échantillons s'immobilisent.

15. Procédé pour fabriquer un dispositif selon l'une des revendications 1 à 14, **caractérisé en ce qu'**une couche tampon (3) est déposée sur un côté d'un substrat (1) et que des passages traversants (6) sont formés dans le substrat (1) du côté situé à l'opposé de cette couche et s'étendant au moins jusqu'à la couche tampon (3).

16. Procédé pour fabriquer un dispositif selon l'une des revendications 1 à 14, **caractérisé en ce qu'**une couche tampon et une couche formant guide d'ondes (3, 4) sont disposées sur un coté du substrat (1), que des passages traversants (6) sont formés dans le substrat (1) à partir du côté opposé au moins jusqu'à la couche tampon (3) et qu'un réseau (4) de guides d'onde en forme de bandes est formé, d'une manière associée respectivement aux passages traversants (6), à l'aide d'un procédé de structuration.

17. Procédé selon la revendication 15 ou 16, **caractérisé en ce que** différentes couches sélectives d'immobilisation sont formées, d'une manière associée aux passages traversants (6), sur la couche tampon (3) ou sur la structure (4) de guide d'ondes en forme de bandes.

18. Procédé selon la revendication 16 ou 17, **caractérisé en ce que** les passages traversants (6) sont formés jusqu'à la structure (4) de guides d'ondes en forme de bandes et que les différentes couches d'immobilisation sont déposées sur la structure (4) formant guide d'ondes en forme de bandes, dans les passages traversants (6).
